# EUROPEAN PATENT APPLICATION

(11) **EP 1 468 610 A1**
(43) Date of publication of application: **20.10.2004**
(21) Application number: 03425238.7
(22) Date of filing: 17.04.2003
(51) Int. Cl.: A21B 1/22, F24C 7/04, A47J 37/04

(54) **Electric oven for baking pizza**

(71) Applicant: CMT Costruzioni Meccaniche e Tecnologia S.p.A., I-12010 Peveragno (CN) (IT)
(72) Inventor: Tomatis, Stefano, 12010 Peveragno (CN) (IT)
(74) Representative: Spandonari, Carlo, Dr. Ing.

(57) **Abstract**

An electric oven for baking pizzas has a floor (14), a roof (20), and end walls (16, 18) and side walls (26, 28) extending therebetween, with slot-shaped passages (30, 32) extending along the floor (14) in opposite side walls (26, 28). The oven comprises a perforated metal plate (34a, 34b) supported above the floor (14), respective lower heating elements (42, 44) extending from the opposite end walls (16, 18) immediately below the metal plate (34a, 34b) and parallel to it, connected to a power supply (PS) and adapted to be heated up to incandescence when a raw product is loaded into the oven, and respective upper heating elements (46a, 46b, 48a, 48b) extending from the opposite end walls (16, 18) above the metal plate (34a, 34b) and parallel to it, also connected to the power supply (PS) and adapted to be heated up to incandescence when a raw product is loaded into the oven.

## Description

The present invention relates to an electric oven for baking pizza.

Traditionally, large ovens have been used for baking pizza, provided with a heating chamber heated by firewood, electric resistors, or other suitable heating means. The heating chamber is lined with refractory material in order exploit its high thermal capacity to keep substantially constant the temperature for a long time (a few hours), even after the heating means being disabled. Such ovens are adapted to bake batches of a large number of pizzas.

Nowadays, small electric ovens are often employed in pizzerias or fast-food restaurants, adapted to successively bake groups of two or three pizzas. The heating chamber is provided with a stone, or any other refractory material adapted to enhance stabilizing the temperature, on which the flat, thin disc of dough is baked.

However, because of their small size, such ovens have a lower thermal capacity that is sufficient for baking only a few groups of pizzas. In fact, the quick alternation of pizzas in the heating chamber cause the refractory material not to have time sufficient for recovering the amount of heat delivered to the preceding pizzas.

In particular, whenever an area of the stone is successively engaged by two or three discs of dough, the above mentioned drawback becomes very serious, because that area eventually cools down, thereby preventing good baking of the following pizzas.

Therefore, a main object of this invention is to provide an electric oven for baking pizza, whose baking chamber is precisely controllable for temperature and capable of quickly recovering its rated temperature, so that an indefinite number of pizzas having the desired features of crispness and/or softness can be baked.

The above mentioned object and other advantages, which will better appear from the following description, are achieved by the electric oven having the features recited in claim 1, while the dependent claims state other advantageous, non-essential features.

The invention will now be described in more detail with reference to a preferred, non-exclusive embodiment, shown by way of non limiting example in the attached drawings, wherein:

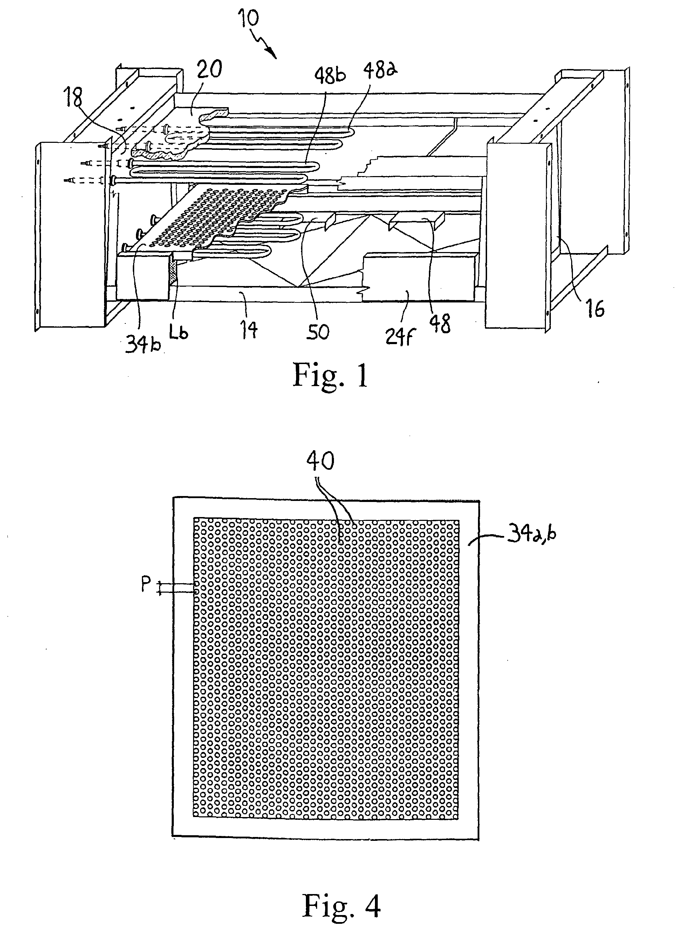

Fig. 1 is a perspective, broken away view of an electric oven according to the invention, in which some parts of the oven have been removed for better clarity;
Fig. 2 is a longitudinal cross section of the electric oven of Fig. 1;
Fig. 3 is a cross section of the electric oven along line III-III of Fig. 2;
Fig. 4 is a plan view of a member of the oven of Fig. 1.

With reference to the figures, an electric oven 10 comprises a main housing 12 consisting of a rectangular floor 14, a roof 20 and end walls 16, 18 and side walls 26, 28 extending therebetween. Slot-shaped passages 30, 32 extend along floor 14 in opposite side walls 26, 28 respectively. Preferably, side walls 26, 28 are partly made of transparent material and are hinged for opening for cleaning the oven.

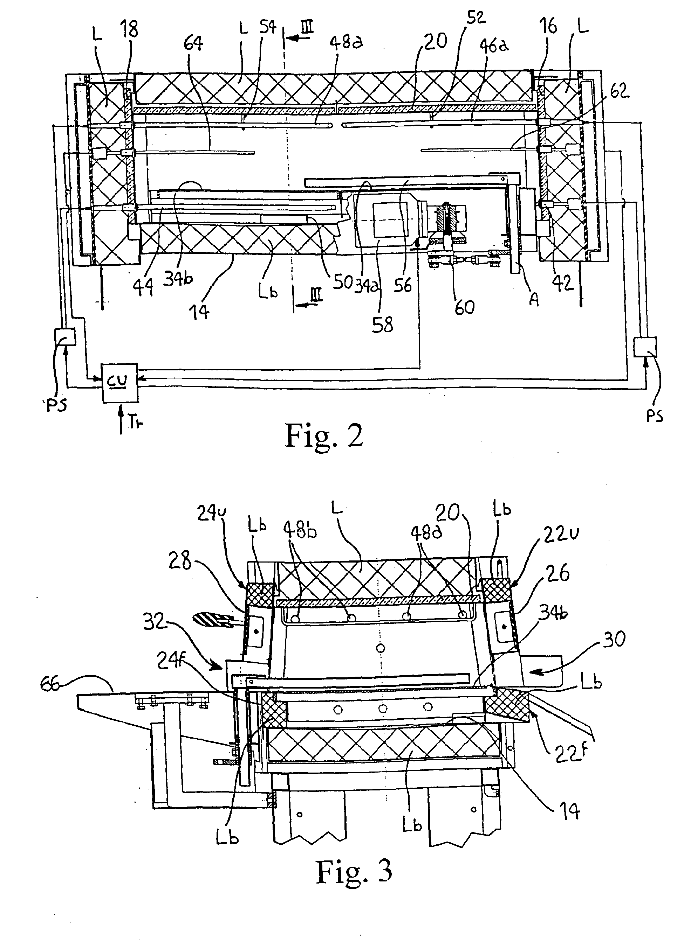

Lower beams 22f, 24f and upper beams 22u, 24u extend along longitudinal edges of floor 14 and roof 20 respectively. Lower beams 22f, 24f and upper beams 22u, 24u, as well as floor 14, are filled with insulating material Lb. As shown in Figs. 2, 3, end walls 16, 18 and roof 20 are also lined with insulating material L.

Lower beams 22f, 24f support a perforated metal plate preferably comprising two separate steel sheets 34a, 34b arranged side by side.

Respective lower heating elements, comprising sinuously bent, lined electric resistors 42, 44, extend from opposite end walls 16, 18 immediately below steel sheets 34a, 34b and parallel to them. Similarly, respective upper heating elements, each one comprising a pair of sinuously bent, lined electric resistors 46a, 46b and 48a, 48b, extend from opposite walls 16 and 18 above steel sheets 34a, 34b and parallel to them. The upper resistors are supported on brackets 52, 54 attached to roof 20. Heating elements 42, 44, 46a, 46b and 48a, 48b are connected to a power supply PS controlled by a control unit CU.

An ejection arm 56 is pivotally supported at its end about a vertical axis A, and is operated by a motor 58 via linkages 60 for sweeping steel sheets 34a, 34b and pushing any pizza out of the oven through passage 32. The action of ejection arm 56 is also controlled by control unit CU.

The heating chamber is provided with respective thermometric probes 62, 64 extending from opposite walls 16, 18, between heating elements 44, 46, 48, 50 and the steel sheets. The thermometric probes 62, 64 are also controlled by control unit CU.

Oven 10 is adapted to contemporaneously bake two pizzas each engaging a respective steel sheet 34a or 34b. Accordingly, each pizza is directly subjected to the baking action of those heating elements which project towards the corresponding half of the heating chamber.

According to this invention, baking is performed through three cooperating different actions, i.e. conduction, convection, and particularly radiation. Control unit CU is adapted to keep constant the temperature in the heating chamber, which temperature is set by a signal Tr sent to control unit CU. When a raw pizza is loaded into the oven, the corresponding heating elements are heated up to incandescence, thereby irradiating the dough through holes of the corresponding steel sheet. After a predetermined time, e.g. two minutes, control unit CU commands the rotation of ejection arm 56, so that the latter will push the baked pizza out of the oven onto a ledge 66.

As shown in more detail in Fig. 4, for best effectiveness of the heating action by radiation, the perforated area of the steel sheet should have 30% to 50% of overall aperture surface, preferably at least 35%. Accordingly, the sheet has a plurality of round holes such as 40, which are 6 mm in diameter and are honeycomb-arranged, with a pitch P between holes substantially equal to 2/3 of their diameter. Preferably, each steel sheet 34a, 34b is 4 mm thick.

## Claims

1. An electric oven, particularly for baking pizzas, having a floor (14), a roof (20), and end walls (16, 18) and side walls (26, 28) extending therebetween, with slot-shaped passages (30, 32) extending along the floor (14) in opposite side walls (26, 28), **characterized in that** it comprises
- a perforated metal plate (34a, 34b) supported above the floor (14),
- respective lower heating elements (42, 44) extending from the opposite end walls (16, 18) immediately below the metal plate (34a, 34b) and parallel to it, connected to a power supply (PS) and adapted to be heated up to incandescence when a raw product is loaded into the oven,
- respective upper heating elements (46a, 46b, 48a, 48b) extending from the opposite end walls (16, 18) above the metal plate (34a, 34b) and parallel to it, also connected to the power supply (PS) and adapted to be heated up to incandescence when a raw product is loaded into the oven.

2. The electric oven of claim 1, **characterized in that** the perforated area of said metal plate (34a, 34b) has at least 35% of overall aperture surface.

3. The electric oven claim 2, **characterized in that** said metal plate (34a, 34b) has a plurality of round holes (40), which are honeycomb-arranged with a pitch (P) between holes substantially equal to 2/3 of their diameter.

4. The electric oven claim 3, **characterized in that** said round holes (40) are 6 mm in diameter.

5. The electric oven of any of claims 1 to 4, **characterized in that** said perforated metal plate (34a, 34b) comprises a steel sheet 4 mm thick.

6. The electric oven of any of claims 1 to 5, **characterized in that** it comprises a control unit (CU) connected to a thermometric probe (62, 64), which extends inwardly the oven, for receiving a temperature signal, and to said power supply (PS) for keeping substantially constant the temperature in the oven when it is empty, and for heating up to incandescence the lower heating elements (42, 44) and the upper heating elements (46a, 46b, 48a, 48b) when a raw product is loaded into the oven.

7. The electric oven of any of claims 1 to 6, **characterized in that** said lower heating elements (42, 44) and upper heating elements (46a, 46b, 48a, 48b) are sinuously bent, lined electric resistors.

8. The electric oven of any of claims 1 to 7, **characterized in that** said floor 14 is provided with air ways (48, 50).

9. The electric oven of any of claims 1 to 8, **characterized in that** said side walls (26, 28) are at least partly made of transparent material.

10. The electric oven of any of claims 1 to 9, **characterized in that** at least one of said side walls is hinged for opening for cleaning the oven.

11. The electric oven of any of claims 1 to 10, **characterized in that** said end walls (16, 18) and roof (20) are lined with insulating material (L).
